# EUROPÄISCHE PATENTSCHRIFT

(11) **EP 1 357 806 B1**
(45) Veröffentlichungstag und Bekanntmachung des Hinweises auf die Patenterteilung: **04.05.2005**
(21) Anmeldenummer: 02704626.7
(22) Anmeldetag: 04.02.2002
(51) Int. Cl.: A23L 1/00, B01F 7/32, B01F 15/06

(54) **ALS WÄRMETAUSCHER AUSGEBILDETES RÜHRWERK**
STIRRING DEVICE EMBODIED AS A HEAT EXCHANGER
MELANGEUR CONCU COMME ECHANGEUR THERMIQUE

(30) Priorität: 08.02.2001 DE 10106087
(43) Veröffentlichungstag der Anmeldung: 05.11.2003
(60) Teilanmeldung: 04013214.4
(73) Patentinhaber: Metos Oy Ab, 04220 Kerava (FI)
(72) Erfinder: Goseling, Hubert, 97959 Assamstadt (DE); Kienzle, Paul, 97990 Weikersheim (DE)
(74) Vertreter: Böck, Bernhard, Dipl.-Ing.
(86) Internationale Anmeldenummer: PCT/DE2002/000395
(87) Internationale Veröffentlichungsnummer: WO 2002/062158

(56) Entgegenhaltungen:
- EP-A- 0 907 060
- DE-A- 3 727 594
- DE-B- 1 262 974
- US-A- 4 478 247
- US-A- 4 640 099
- US-A- 5 218 898
- US-A- 5 381 670
- US-A- 5 864 963
- PATENT ABSTRACTS OF JAPAN vol. 006, no. 131 (C-114), 17. Juli 1982 (1982-07-17) & JP 57 056033 A (NIPPON MINING CO LTD), 3. April 1982 (1982-04-03)

## Beschreibung

Die Erfindung betrifft ein Rührwerk nach dem Oberbegriff des Anspruchs 1.

In vielen Gemeinschaftsverpflegungseinrichtungen, beispielsweise Kantinen von Großbetrieben oder in Krankenhäusern, ist es erforderlich, dass an sieben Tagen der Woche Speisen ausgegeben werden. Werden diese Speisen an sieben Tagen der Woche jeweils frisch zubereitet, entstehen dadurch hohe Kosten, da der Einsatz des Küchenpersonals über das Wochenende nur bei Zahlung von entsprechenden Aufschlägen möglich ist. Es wird deshalb vielfach ein Verfahren eingesetzt, das in Fachkreisen als "Cook and Chill" bezeichnet wird. Bei diesem Verfahren werden die Speisen nur wochentags zubereitet, wobei die für das Wochenende erforderlichen Portionen in dieser Zeit vorgekocht werden. Nach der Zubereitung der vorgekochten Speisemenge wird diese auf eine Temperatur unterhalb von 8°C heruntergekühlt und bei einer geeigneten Kühltemperatur gelagert. Dabei sollte eine Temperatur von 3°C zumindest einmal kurz unterschritten werden. Die Speisemasse kann dann zum Verzehr an den Wochenenden im Ganzen oder portionsweise aufgewärmt werden.

Problematisch an dem "Cook and Chill"-Verfahren ist es, dass es aufgrund der Lagerung der Speisen bis zu deren Aufwärmung zu hygienischen Belastungen kommen kann. Dabei ist weniger die Lagerung bei einer Temperatur unterhalb von 8°C kritisch, da sich bei diesen Temperaturen Mikroorganismen wie Bakterien und Pilze kaum vermehren. Als kritische Größe ist vielmehr die Abkühlphase anzusehen, während der die Speisen einen Temperaturbereich von 55°C bis zur Endtemperatur unter 8°C durchlaufen. In diesem Temperaturband finden Mikroorganismen in der vorgekochten Speise optimale Vermehrungsbedingungen und können sich somit während der Abkühlphase besonders stark vermehren.

Um die Vermehrung der Mikroorganismen während der Abkühlphase unterhalb eines tolerierbaren Maßes zu halten, ist es erforderlich, dass die vorgekochten Speisen innerhalb möglichst kurzer Zeit auf die Endtemperatur heruntergekühlt werden. Um die Vermehrung der Mikroorganismen während der Abkühlphase zuverlässig reduzieren zu können, ist es zwingend, dass nicht nur Teilbereiche der Speise die Endtemperatur innerhalb ausreichend kurzer Zeit erreicht haben, sondern dass die Speisemasse ausgehend vom Rand bis hin zum Kern durchgehend auf die Endtemperatur abgekühlt ist.

Wird die Speise, beispielsweise durch Einbringung eines die Speisemasse enthaltenden Behälters in einen Kühlschrank, lediglich vom Rand ausgehend gekühlt, so hängt die Dauer, bis der Kern der Speisenmasse die Endtemperatur erreicht hat, vom Volumen der Speisemasse relativ zu seiner Randfläche, an der gekühlt werden kann, ab. Um die Abkühlphase beim Durchfahren des kritischen Temperaturbereichs bis zur Erreichung der Endtemperatur auch im Kern der Speisemasse auf ein tolerierbares Maß im Bereich unterhalb von 120 Minuten, insbesondere kürzer als 90 Minuten, zu halten, ist es deshalb bekannt, die Speise vorportioniert in flache Behälter abzufüllen und erst diese flachen Behälter dann einzeln herunterzukühlen. Durch das Vorportionieren in kleinere Behälter werden allerdings wiederum höhere Kosten verursacht.

Die DE 40 09 157 C2 beschreibt ein Verfahren zur Vorbehandlung von Reis, bei dem der Reis entsprechend einem bestimmten Temperaturprozess vorgekocht und anschließend getrocknet wird.

Die EP 0 338 282 B1 offenbart ein Verfahren zur sterilen Vorkochung von Nudelprodukten, die nach der Kochung verzehrfertig abgepackt werden können.

Die DE 37 27 594 A1, die DE-OS 1 926 704 und die DE 32 00 165 A1 beschreiben jeweils Rührwerke, bei denen das Rührwerk in der Art eines Wärmetauschers ausgebildet ist und von einem Kühl- bzw. Heizmedium durchströmt werden kann.

Aufgabe der vorliegenden Erfindung ist es ein neues Rührwerk vorzuschlagen.

Vorteilhafte Ausführungsformen der Erfindung sind Gegenstand der Unteransprüche.

Gattungsgemäß ist das Rührwerk in der Art eines Wärmetauschers ausgebildet und kann von einem Kühlmedium durchströmt werden, so dass im Ergebnis Wärmeenergie aus der Speisemasse abgeführt werden kann. Um einen ausreichenden Strömungsquerschnitt im Rührwerkkopf realisieren zu können, wie er insbesondere bei der Verwendung von Eisbrei als Kühlmittel notwendig ist, ist beim erfindungsgemäßen Rührwerk der Rührwerkkopf aus einem feststehend angeordneten Deckel und einer zusammen mit dem Rührwerk drehbaren Wanne gebildet, wobei der Deckel dichtend auf der Wanne befestigbar ist.

Der Einsatz des erfindungsgemäßen Rührwerks ist nicht auf den Einsatzbereich zur Kühlung von vorgekochten Speisen beschränkt. Wird das Rührwerk statt von einem Kühlmedium von einem Heizmedium, beispielsweise Heißwasser oder Heißdampf, durchströmt, ist es selbstverständlich auch möglich, die vom Rührwerk durchmischte Speisemasse zu erwärmen. Dadurch kann die Dauer der Aufwärmphase während der Zubereitung der Speisen erheblich verkürzt werden, da größere Wärmemengen in kürzerer Zeit in die Speisemasse einkoppelbar sind.

Das erfindungsgemäße Rührwerk ist auch nicht auf das Einsatzfeld der Zubereitung von Speisen beschränkt, sondern kann überall dort eingesetzt werden, wo durchmischbare Massen möglichst gleichmäßig erhitzt oder gekühlt werden müssen. Durchmischbare Massen im Sinne dieser Erfindung sind dabei alle Stoffe bzw. Stoffgemische, deren Aggregatszustand zumindest noch eine geringfügige Durchmischung erlaubt. Darunter fallen insbesondere auch hochviskose Massen, wie beispielsweise ein Kartoffelbrei, oder Gemische aus flüssigen Bestandteilen und Feststoffbestandteilen, wie beispielsweise ein Eintopf.

Beispielsweise ist der Einsatz des erfindungsgemäßen Rührwerks in der chemischen Industrie denkbar, um beispielsweise unterschiedliche Reagenzien gleichzeitig zu durchmischen und zu kühlen beziehungsweise zu erwärmen. Die Dimensionierung des erfindungsgemäßen Rührwerks ist abhängig vom jeweiligen Einsatzfall. Dabei sind Abmessungen mit Durchmessern im Zentimeterbereich für Laborgeräte bis hin zu Durchmessern von einigen Metern in der chemischen Industrie denkbar. Beim Einsatz des erfindungsgemäßen Rührwerks bei der Zubereitung von Speisen richten sich dessen Abmessungen im Wesentlichen nach den Abmessungen bzw. der maximalen Füllmenge der Kessel, in denen die Speisen aufgenommen werden. Je nach erforderlicher Kühl- bzw. Heizleistung kann die vom Rührwerk dargestellte Kühl- bzw. Heizfläche in einfacher Weise dadurch angepasst werden, dass beispielsweise die Anzahl der Rührflügel erhöht wird. Die Außenabmessungen des Rührwerks können dabei unverändert bleiben.

Als Kühl- und/oder Heizmedium können alle gasförmigen oder flüssigen Medien, beispielsweise Eiswasser, eine Glykol-Wasser-Mischung, flüssiger Stickstoff, Heißwasser oder Heißdampf, zum Einsatz kommen, da das Kühl- bzw. Heizmedium lediglich die Wärmeenergie aus der zu durchmischenden Masse abführt beziehungsweise in diese einkoppelt, aber kein direkter Stoffaustausch stattfindet. Im Lebensmittelbereich sind besonders Eiswasser, Heißwasser und Heißdampf zum Einsatz im erfindungsgemäßen Rührwerk geeignet, da diese Medien in Großküchen vielfach bereits vorhanden sind und außerdem auch im Falle von Störungen, das heißt falls das Medium aus dem Rührwerk ungewünscht austritt, beispielsweise durch Leckagen, keine Gesundheitsgefährdung darstellen.

Die konstruktive Ausführung des Rührwerks ist grundsätzlich beliebig, solange an den Außenflächen des Rührwerks, die mit der zu durchmischenden Masse in Kontakt kommen, ein ausreichender Wärmeaustausch zwischen der Masse und dem das Rührwerk durchströmenden Kühl- bzw. Heizmedium ermöglicht wird. Besonders vorteilhaft ist es, wenn das Rührwerk einen Rührwerkkopf und einen beziehungsweise mehrere Rührflügel aufweist, wobei der Rührwerkkopf und die verschiedenen Rührwerksflügel durch Stege miteinander verbunden sind. Die Rührflügel und Stege sind dabei doppelwandig auszuführen und stellen dadurch einzelne Leitungsabschnitte dar. Durch entsprechend dichtende Verbindung zwischen den Rührflügeln, den Stegen und dem Rührwerkkopf, beispielsweise durch Verschweißen der einzelnen Teile, entsteht dann eine geschlossene Leitung, deren Einlauf und Rücklauf in den Rührwerkkopf mündet. An dem Rührwerkkopf seinerseits ist ein Zu- und ein Ablauf für das Kühl- bzw. Heizmedium vorgesehen. Im Ergebnis strömt also das Kühl- bzw. Heizmedium in den Rührwerkkopf ein und durchströmt von dort ausgehend die einzelnen Rührflügel und die die Rührflügel verbindenden Stege. Das aufgrund des Wärmeaustausches in den Stegen beziehungsweise Rührflügeln abgekühlte beziehungsweise erwärmte Medium strömt dann wiederum über den Rührwerkkopf aus und wird über den Ablauf abgeführt. Dabei ist es besonders vorteilhaft, wenn das Kühl- bzw. Heizmedium in einem Kühl- bzw. Heizkreislauf durch einen Kühler bzw. eine Heizeinrichtung geführt wird. Selbstverständlich ist es auch möglich, dass ausgehend vom Rührwerkkopf mehrere parallel zueinander verlaufende Leitungen durch die einzelnen Rührflügel und Stege verlaufen, so dass das Rührwerk entlang mehrerer parallel zueinander verlaufender Leitungen vom Kühl- bzw. Heizmedium durchströmbar ist.

Um die Durchmischung des Kühl- bzw. Heizmediums am Ein- bzw. Rücklauf im Rührwerkkopf zu verhindern, kann der Rührwerkkopf zwei getrennte Kammern aufweisen. Die erste Kammer bildet dabei den Einlauf der Leitung durch das Rührwerk und kann an den Zulauf für das Kühl- bzw. Heizmedium angeschlossen werden. Die zweite Kammer bildet dann den Rücklauf der Leitung durch das Rührwerk und ist an den Ablauf für das Kühl- bzw. Heizmedium anschließbar. Durch die Trennwandung zwischen den beiden Kammern wird eine Durchmischung des frischen Kühl- bzw. Heizmediums am Einlauf mit dem bereits erwärmten bzw. abgekühlten Kühl- bzw. Heizmedium am Rücklauf ausgeschlossen.

Um die Anschlüsse für den Zu- und Ablauf des Kühl- bzw. Heizmediums einfach ausbilden zu können, beispielsweise in der Art von Steckkupplungen, an denen geeignete Schläuche anschließbar sind, ist es vorteilhaft, wenn der Rührwerkkopf einen feststehenden und einen zusammen mit den Rührflügeln drehbaren Teil aufweist. In den feststehenden Teil werden dann die Anschlüsse für den Zu- bzw. Ablauf des Kühl- bzw. Heizmediums angeordnet, wohingegen der drehbar gelagerte Teil des Rührwerkkopfs den Ein- bzw. Auslauf in die Leitung durch das Rührwerk darstellt.

Um den erfindungsgemäßen Rührflügel in unterschiedlichen Rührkesseln einsetzen zu können, ist es vorteilhaft, wenn am Rührwerkkopf wahlweise unterschiedliche Adapterelemente befestigt werden können, die jeweils mit verschiedenen Antriebswellen in Eingriff bringbar sind. Im Ergebnis kann dadurch erreicht werden, dass das Rührwerk mit dem Rührwerkkopf, den Rührflügeln und Stegen in einheitlichen Baureihen hergestellt werden kann und eine Anpassung an unterschiedliche Antriebswellen durch Anbringung verschiedener Adapterelemente ermöglicht wird.

Alternativ zum Antrieb des Rührwerks mittels eines Antriebsmotors und eine die Drehbewegung übertragenden Antriebswelle kann auch die Strömungsenergie des am Einlauf einströmenden Kühl- bzw. Heizmediums zum Antrieb des Rührwerks ausgenutzt werden. Beispielsweise können dazu bekannte Strömungslamellen im Rührwerkkopf angeordnet werden, die die Strömungsenergie des einströmenden Mediums in eine Drehbewegung umwandeln.

Bevorzugte Ausführungsformen der Erfindung sind in den Zeichnungen beispielhaft dargestellt und werden nachfolgend näher erläutert.

Es zeigen:
- **Fig.1**: ein Rührwerk in seitlicher Ansicht;
- **Fig.2**: das Rührwerk gemäß **Fig. 1** in einer ersten perspektivischen Ansicht;
- **Fig.3**: das Rührwerk gemäß **Fig. 1** in einer zweiten perspektivischen Ansicht;
- **Fig.4**: das Gitternetzmodell eines Rührwerkkopfes;

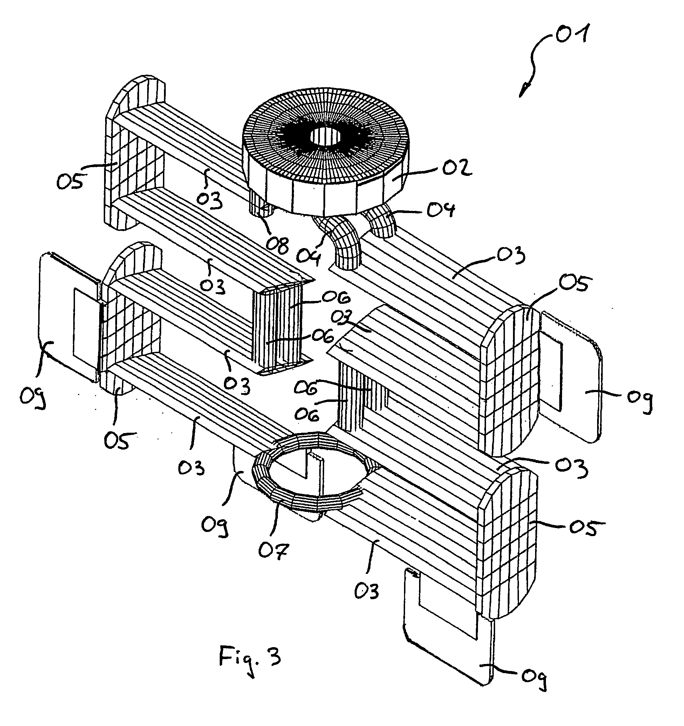

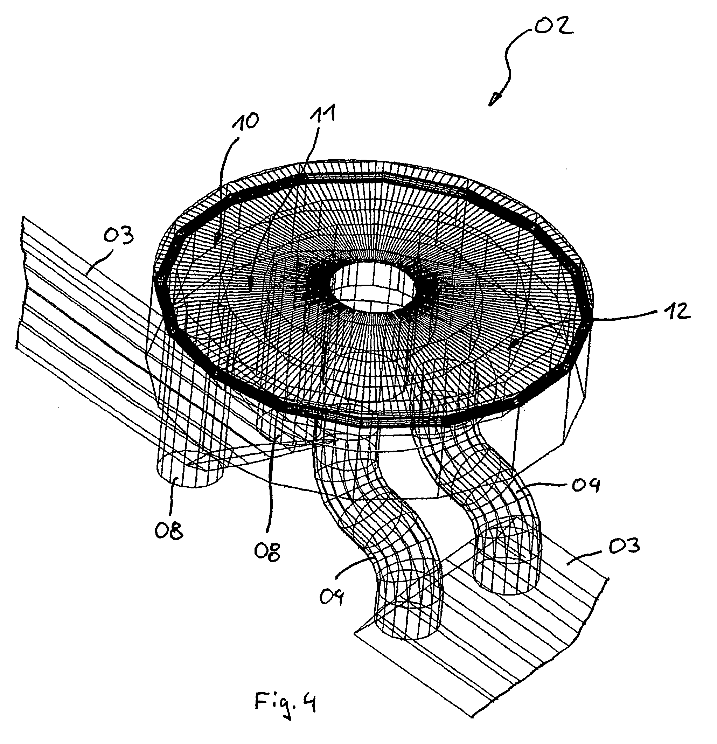

- **Fig.4**: einen Rührwerkkopf in einem schematisch dargestellten Querschnitt;

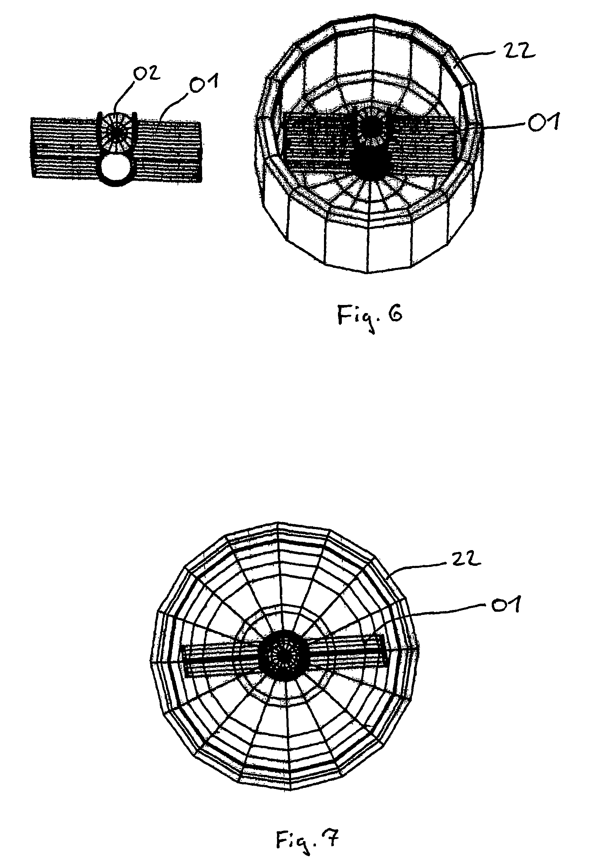

- **Fig.6**: ein Rührgefäß mit Rührwerk in perspektivischer Ansicht;

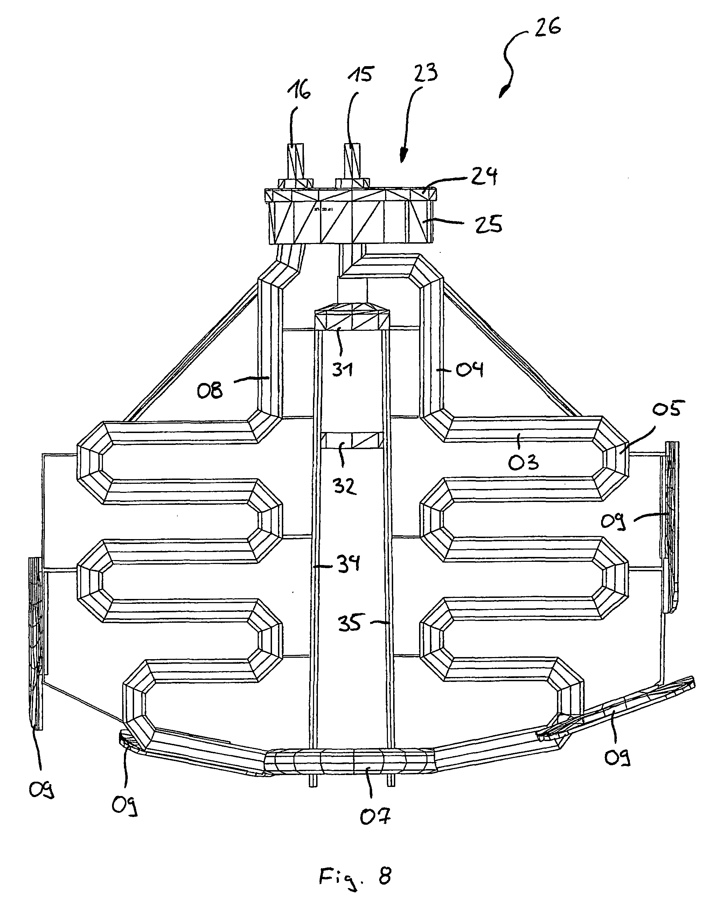

- **Fig.7**: das Rührgefäß mit Rührwerk gemäß **Fig. 6** in Ansicht von oben;
- **Fig.8**: eine zweite Ausführungsform eines Rührwerks in seitlicher Ansicht;

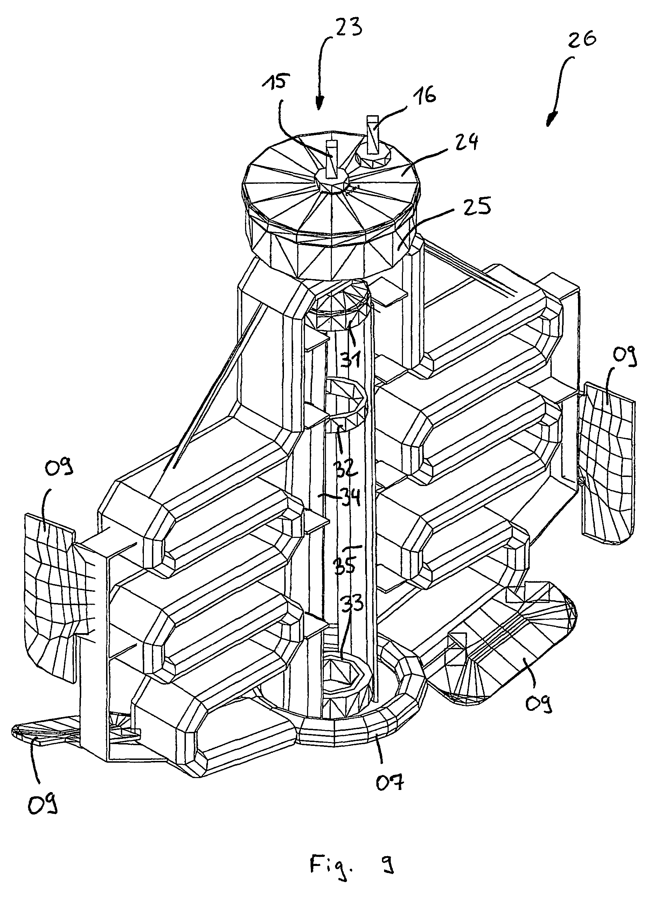

- **Fig.9**: das Rührwerk gemäß **Fig. 8** in einer ersten perspektivischen Ansicht;

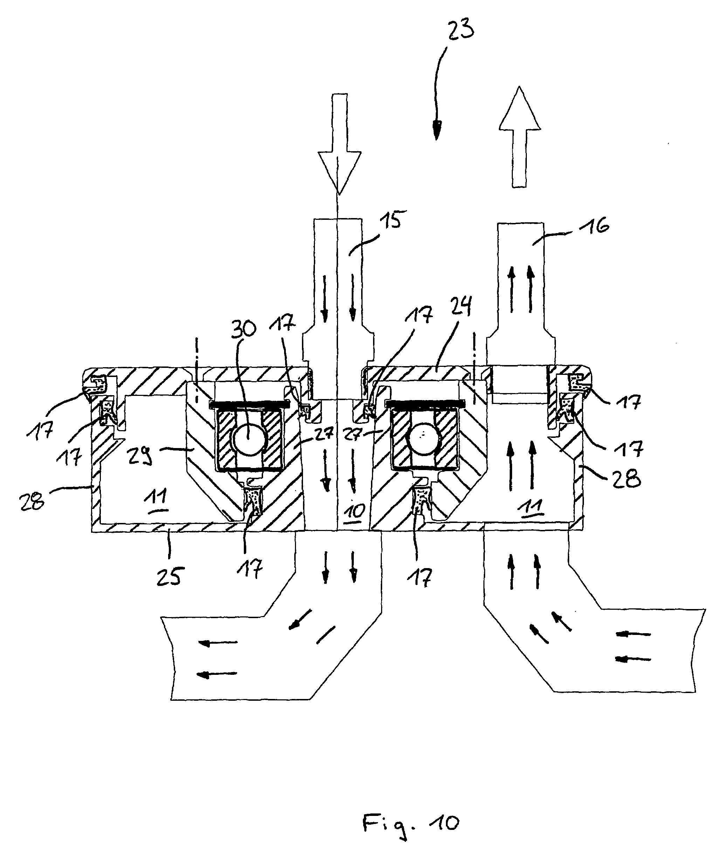

- **Fig.10**: den Rührwerkkopf des Rührwerks gemäß **Fig. 8** im Querschnitt;

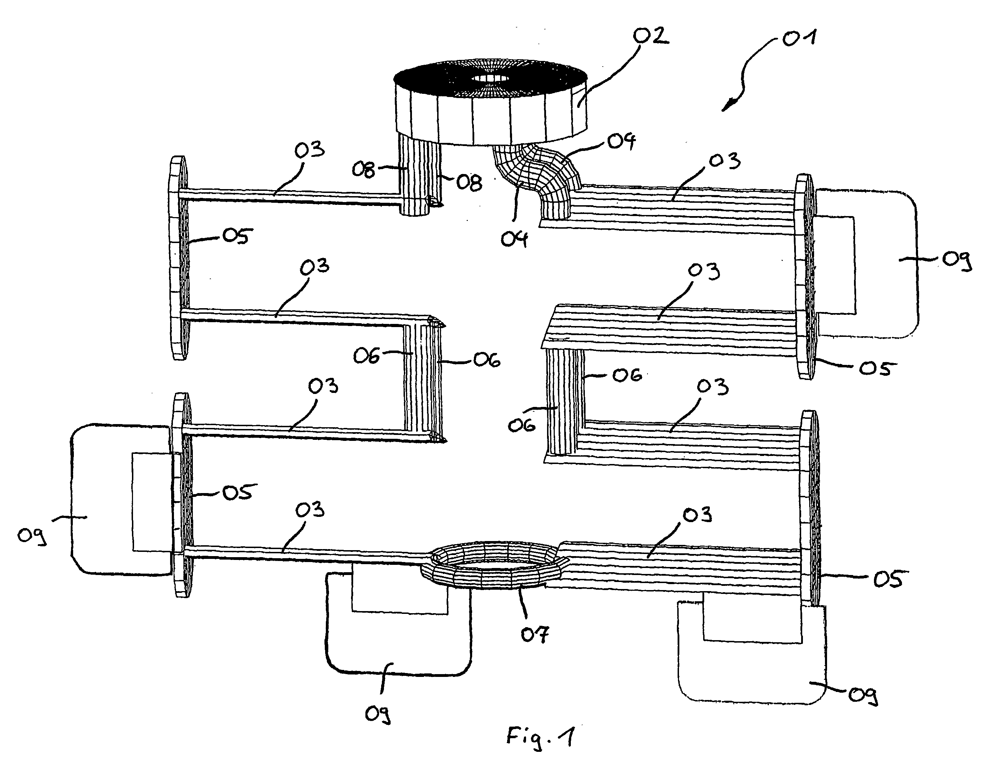

**Fig.1** zeigt ein Rührwerk 01, das in einem Kessel zur Zubereitung von Speisen Verwendung finden kann und der Durchmischung und Aufheizung bzw. Kühlung der Speisen dient.

Das Rührwerk 01 ist als Schweißteil hergestellt und im Wesentlichen aus einem Rührwerkkopf 02, acht Rührflügeln 03 und die Rührflügel 03 beziehungsweise den Rührwerkkopf 02 verbindenden Stegen 04, 05, 06, 07 und 08 aufgebaut. Die Rührflügel 03 und die Stege 04 bis 08 sind doppelwandig ausgebildet und zu einer geschlossenen Leitung verbunden, so dass ein am Rührwerkkopf 02 einströmendes Kühl- bzw. Heizmedium das Rührwerk 01 entlang dieser Leitung durchströmen und dabei Wärmeenergie abführen bzw. Wärmeenergie einkoppeln kann.

Die Rührflügel 03 sind gegenüber ihrer horizontal verlaufenden Bewegungsebene mit einem Winkel von circa 20° geneigt, so dass beim rotatorischen Antrieb des Rührwerks 01 um seine Mittelachse die an den Rührflügeln 03 vorbeiströmende Masse nach oben beziehungsweise unten abgelenkt wird, so dass die Masse permanent durchmischt wird und sich keine stehenden Zonen bilden.

Zum Antrieb des Rührwerks 01 dient eine nicht dargestellte, im Rührgefäß vorgesehene Antriebswelle, die sich vom Boden des Rührgefäßes nach oben erstreckt und in einer Aufnahme am Rührwerkkopf 02 in Eingriff gebracht werden kann. Damit die Antriebswelle nicht mit dem Rührwerk 01 kollidiert, ist der Steg 07 in der Art einer Ringleitung ausgebildet, so dass die Antriebswelle das Rührwerk 01 im Bereich des Stegs 07 durchgreifen kann.

An zwei der Stege 05 und an den beiden unteren Rührflügeln 03 sind jeweils Abstreifelemente 09 befestigt, die bei der rotatorischen Antriebsbewegung des Rührwerks 01 entlang der Bauteilwandung des Rührgefäßes geführt werden, so dass sich im Grenzbereich zwischen

Masse und Bauteilwandung keine stehenden Zonen bilden, sondern auch in diesem Bereich eine optimale Durchmischung erreicht wird. Um das Rührwerk in Rührgefäßen unterschiedlicher Abmessungen einsetzen zu können, können die Abstreifelemente 09 verstellbar am Rührwerk 01 befestigt sein, so dass ein Größenausgleich ermöglicht wird.

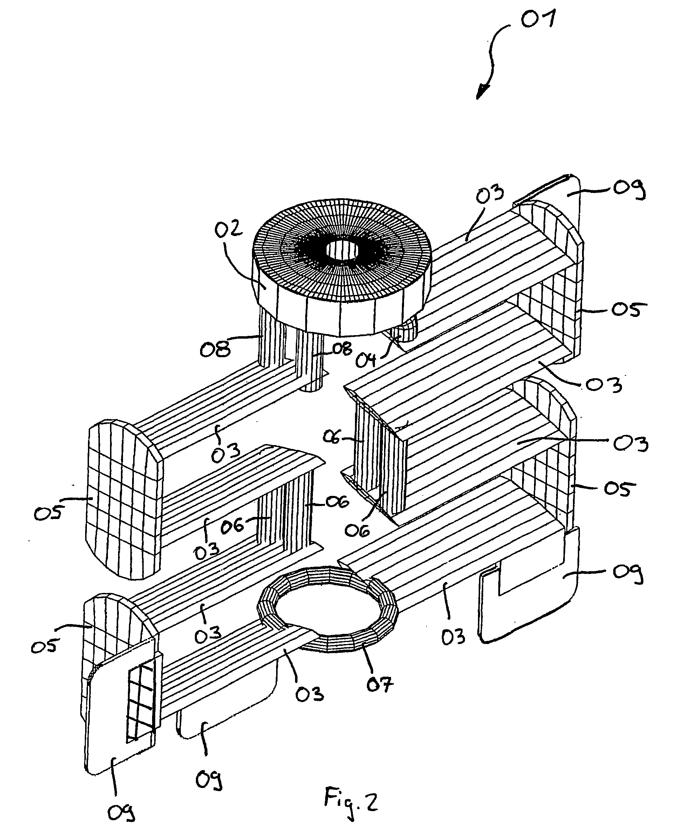

**Die Fig. 2** und **3** zeigen das Rührwerk 01 in zwei unterschiedlichen perspektivischen Ansichten.

**In Fig. 4** ist der Rührwerkkopf 02 als Gitternetzmodell vergrößert dargestellt. Der Deckel des Rührwerkkopfs 02 mit den Anschlüssen für Zu- und Ablauf des Kühl- bzw. Heizmediums ist in diesem Gitternetzmodell nicht dargestellt. Der Rührwerkkopf weist zwei konzentrisch angeordnete Kammern 10 und 11 auf, die durch eine Trennwandung 12 voneinander getrennt sind. Die Stege 04 münden beide in die innere Kammer 11, wohingegen die Stege 08 in die äußere Kammer 10 münden. Dadurch wird erreicht, dass das frische Kühl- bzw. Heizmedium über die äußere Kammer 10 und die Stege 08 in das Rührwerk 01 einströmen kann und durch die Trennwandung 12 von dem bereits erwärmten beziehungsweise abgekühlten Kühl- bzw. Heizmedium, das über die Stege 04 zurück in die Kammer 11 des Rührwerkkopfs 02 zurückströmt, getrennt ist.

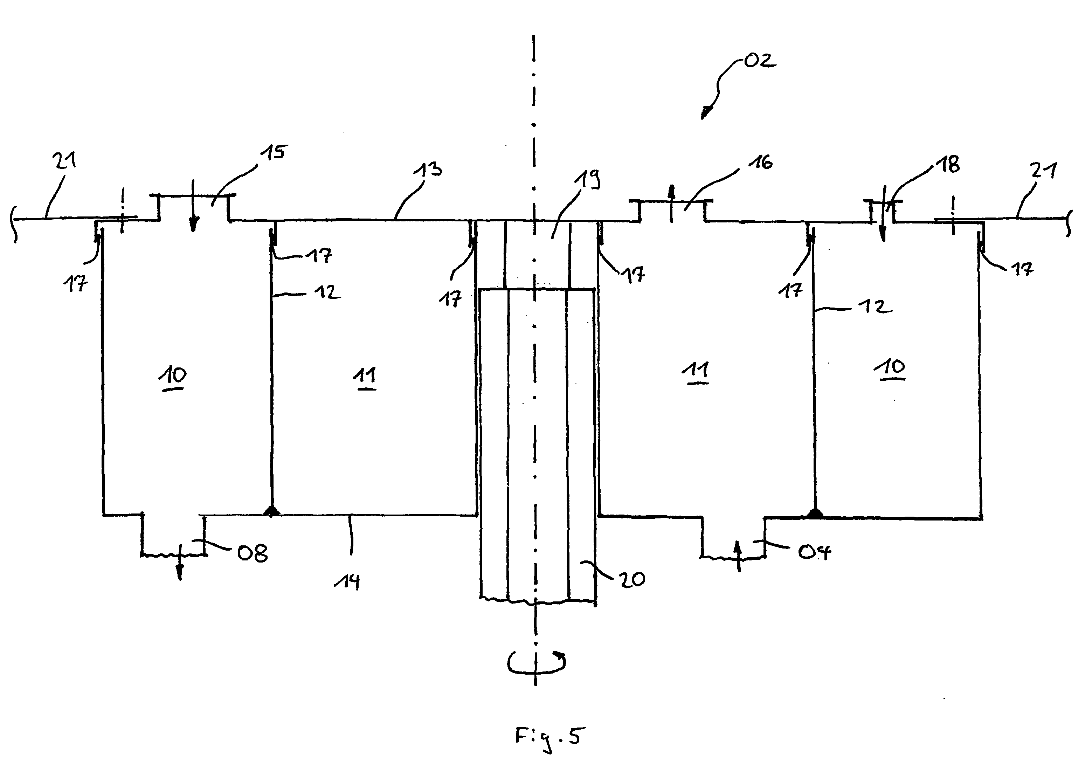

Der schematische Aufbau und die Funktion des Rührwerkkopfes 02 sind anhand des in **Fig. 5** dargestellten schematischen Querschnitts erkennbar. Die beiden Kammern 10 und 11 werden von der Trennwandung 12 voneinander getrennt. Beide Kammern 10 und 11 werden von einem feststehend angeordneten Deckel 13 und einer zusammen mit dem Rührwerk drehbar gelagerten Wanne 14 nach außen hin begrenzt. Die Trennwandung 12 ist flüssigkeitsdicht am Boden der Wanne 14 festgeschweißt.

Über den Zulauf 15 strömt das Kühl- bzw. Heizmedium in die Kammer 10 ein und gelangt von dort in die Stege 08, die den Einlauf in die Leitung durch das Rührwerk 01 bilden. Hat das Kühl- bzw. Heizmedium alle Stege 04 bis 08 und die Rührflügel 03 durchflossen, strömt es über die den Rücklauf bildenden Stege 04 in die Kammer 11 des Rührwerkkopfes 02 zurück, von wo es über den Ablauf 16 abgeführt werden kann. Zur Abdichtung der Kammern 10 und 11 sind in den Dichtspalten zwischen dem feststehenden Deckel 13 und der sich zusammen mit den Rührflügeln drehenden Wanne 14 bzw. der Trennwandung 12 Wellendichtringe 17 angeordnet.

Neben dem Zulauf 15 und dem Ablauf 16 ist in dem Deckel 13 außerdem noch ein Druckluftanschluss 18 vorgesehen, an dem eine Druckluftleitung anschließbar ist. Über dem Druckluftanschluss 18 kann Druckluft in die Kammer 10 eingepresst werden, so dass das im Rührwerk 01 befindliche Kühl- bzw. Heizmedium über die Kammer 11 und den Ablauf 16 nach außen verdrängt werden kann.

Die Mitte der Wanne 14 ist als Vielkantverzahnung 19 ausgebildet, in der das formkomplementär ausgebildete Ende einer Antriebswelle 20 in Eingriff bringbar ist, so dass ein Drehmoment von der Antriebswelle 20 auf die Wanne 14 übertragen werden kann. Am Deckel 13 ist ein gebrochen dargestelltes Eingreifschutzelement 21 befestigt, um ein Eingreifen von außen in das angetriebene Rührwerk 01 zu verhindern.

**Fig. 6** zeigt das Rührwerk 01, wie es in einem als Kochkessel ausgebildeten Rührgefäß 22 angeordnet werden kann.

**Fig. 7** stellt das Rührwerk 01 und das Rührgefäß 22 in Ansicht von oben dar. Das Rührgefäß 22 seinerseits ist ebenfalls doppelwandig ausgebildet und kann vom gleichen Kühl- bzw. Heizmedium durchströmt werden wie das Rührwerk 01, so dass die im Rührgefäß 22 angeordneten Speisen in kürzerer Zeit aufgeheizt beziehungsweise abgekühlt werden können.

**Fig. 8** stellt eine zweite Ausführungsform eines erfindungsgemäßen Rührwerks in seitlicher Ansicht dar. Wie beim Rührwerk 01 sind die doppelwandig ausgebildeten Stege 03, 04, 05, 06, 07 und 08 vorgesehen, die von einem geeigneten Kühlmittel, beispielsweise Eisbrei, durchströmt werden können. Die Enden der Stege 04 und 08 münden jeweils in den Rührwerkkopf 23, der aus einem Deckel 24 und einer Wanne 25 gebildet ist.

Um die Antriebsleistung des Antriebsmotors auf das Rührwerk 26 übertragen zu können, ist eine Aufnahme vorgesehen, die aus zwei Vertikalstegen 34 und 35 und drei daran befestigten Innenvielkantelementen 31, 32 und 33 (siehe **Fig. 9**) gebildet ist. Die in **Fig. 8** nicht dargestellte, sich im Rührgefäß vertikal nach oben erstreckende Antriebswelle kommt in den Innenvielkantelementen 31 bis 33 formschlüssig zum Eingriff, um das Antriebsmoment auf das Rührwerk 26 zu übertragen. Einen besonderen Vorteil stellt es dabei dar, dass das Rührwerk 26 in einfacher Weise von oben auf die Antriebswelle aufgesteckt werden kann, ohne dass insbesondere eine Demontage des Rührwerkkopfes 23 notwendig ist.

**In Fig. 9** ist das Rührwerk 26 in perspektivischer Ansicht dargestellt, wobei insbesondere die Rührflügel 09 erkennbar sind.

**Fig. 10** stellt den Aufbau des Rührwerkkopfes 23 im Querschnitt dar. Der Rührwerkkopf 23 wird im Wesentlichen aus einer kreisringförmigen Wanne 25 und einem daran drehbar gelagerten Deckel 24 gebildet. Zur Realisierung der drehbaren Lagerung des Deckels 24 an der Wanne 25 sind ein Befestigungsring 29 und ein in der Art eines Wälzlagers ausgebildetes Lagerelement 30 vorgesehen. Der Befestigungsring 29 ist am Innenring 27 der Wanne 25 mittels des Lagerelements 30 drehbar gelagert. Zur Befestigung des Deckels 24 an der Wanne 25 werden Befestigungsschrauben durch entsprechende Ausnehmungen im Deckel 24 durchgesteckt und von oben in den Befestigungsring 29 eingeschraubt, was in **Fig. 10** durch strichpunktierte Linien angedeutet ist. Im Ergebnis ist dadurch der Deckel 24 drehbar an der Wanne 25 gelagert, so dass zur Montage bzw. Demontage des Rührwerks 23 in einem Rührgefäß nur die Befestigung des Zulaufs 15 und des Ablaufs 16 notwendig ist.

Durch die kreisringförmige Ausbildung der Wanne 25 wird im Zentrum der Wanne 25 die Einlaufkammer 10 gebildet, die seitlich vom Innenring 27 begrenzt wird. Die Auslaufkammer 11 wird von der Bauteilwandung der Wanne 25 und dem Befestigungsring 29 begrenzt. Durch die verschiedenen Dichtringe 17 werden die beiden Kammern 10 und 11 flüssigkeitsdicht abgedichtet, so dass im Betrieb des Rührwerks 26 das Kühlmittel nicht aus den Kammern 10 und 11 durch die Dichtspalte hindurch austreten kann. Durch die Anordnung der Kammer 10 im Zentrum der Wanne 25 kann ein sehr kompakter Rührwerkkopf gestaltet werden, wodurch erreicht wird, dass die auf die verschiedenen Bauteile des Rührwerkkopfes 23 wirkenden Druckkräfte auch bei hohen Innendrücken, wie sie insbesondere bei der Verwendung von Eisbrei als Kühlmittel auftreten, ein tolerierbares Maß nicht überschreiten.

## Patentansprüche

1. Rührwerk zur Anordnung in einem Rührgefäß, wobei eine im Rührgefäß enthaltene durchmischbare Masse durch Antrieb des Rührwerks durchmischt werden kann, und wobei das Rührwerk in der Art eines Wärmetauschers ausgebildet ist und zumindest abschnittsweise von einem Kühl- und/oder Heizmedium durchströmt werden kann, und wobei das Rührwerk einen Rührwerkkopf, zumindest einen Rührflügel und den Rührwerkkopf und die Rührflügel verbindende Stege aufweist,
**dadurch gekennzeichnet,**
**dass** der Rührwerkkopf (02, 23) von einem feststehend angeordneten Deckel (13, 24) und einer zusammen mit dem Rührwerk (01, 26) drehbaren Wanne (14, 25) gebildet wird, wobei der Deckel (13, 24) dichtend auf der Wanne (14, 25) befestigbar ist.

2. Rührwerk nach Anspruch 1,
**dadurch gekennzeichnet,**
**dass** ein gasförmiges oder flüssiges Kühl- und/oder Heizmedium verwendet wird, insbesondere dass als Kühlmedium Eiswasser, Eisbrei, eine Glykol-Wasser-Mischung, flüssiger Stickstoff und/oder dass als Heizmedium Heißwasser oder Heißdampf einsetzbar sind.

3. Rührwerk nach Anspruch 1 oder 2,
**dadurch gekennzeichnet,**
**dass** das Rührwerk (01, 26) neben dem Rührwerkkopf (02, 23) zumindest einen Rührflügel (03) und den Rührwerkkopf (02, 23) und die Rührflügel (03) verbindende Stege (04, 05, 06, 07, 08) aufweist, wobei die Rührflügel (03) und die Stege (04, 05, 06, 07, 08) doppelwandig ausgebildet und zu eine geschlossene Leitung, deren Einlauf und deren Rücklauf in den Rührwerkkopf (02, 23) mündet, verbunden sind, wobei am Rührwerkkopf (02, 23) ein Zulauf (15) und ein Ablauf (16) für das Kühl- und/oder Heizmedium vorgesehen ist.

4. Rührwerk nach Anspruch 3,
**dadurch gekennzeichnet,**
**dass** der Rührwerkkopf (02, 23) zwei getrennte Kammern (10, 11) aufweist, wobei die erste Kammer (10) den Einlauf der Leitung durch das Rührwerk (01,26) bildet und an die der Zulauf (15) für das Kühl- und/oder Heizmedium anschließbar ist und wobei die zweite Kammer (11) den Rücklauf der Leitung durch das Rührwerk (01,26) bildet und an die der Ablauf (16) für das Kühl- und/oder Heizmedium anschließbar ist.

5. Rührwerk nach Anspruch 4,
**dadurch gekennzeichnet,**
**dass** die Kammern (10, 11) durch Anordnung einer Trennwandung (12) in der Wanne (14) gebildet werden.

6. Rührwerk nach Anspruch 4,
**dadurch gekennzeichnet,**
**dass** die Wanne (25) kreisringförmig ausgebildet ist und einen Innenring (27) und einen Außenring (28) aufweist, wobei die eine Kammer (10) innerhalb des Innenrings (27) und die zweite Kammer (11) zwischen Innenring (27) und Außenring (28) angeordnet ist.

7. Rührwerk nach Anspruch 6,
**dadurch gekennzeichnet,**
**dass** an der Wanne (25) ein Befestigungsring (29) mit einem Lagerelement (30), insbesondere einem Wälzlager, drehbar gelagert ist, an dem der Deckel (24) derart befestigbar ist, das der Dichtspalt zwischen Deckel (24) und Wanne (25) abgedichtet ist.

8. Rührwerk nach Anspruch 7,
**dadurch gekennzeichnet,**
**dass** das Lagerelement (30) gegenüber beiden Kammern (11) wasserdicht abgedichtet ist.

9. Rührwerk nach einem der Ansprüche 1 bis 8,
**dadurch gekennzeichnet,**
**dass** in den Dichtspalten zwischen Wanne (14, 25) und Deckel (13, 24) Wellendichtringe (17) angeordnet sind.

10. Rührwerk nach einem der Ansprüche 3 bis 9,
**dadurch gekennzeichnet,**
**dass** die Rührflügel (03) relativ zu ihrer Bewegungsebene geneigt angeordnet sind.

11. Rührwerk nach einem der Ansprüche 3 bis 10,
**dadurch gekennzeichnet,**
**dass** einer der Stege (07) in der Art einer Ringleitung ausgebildet ist, die von einer Antriebswelle durchgreifbar ist.

12. Rührwerk nach einem der Ansprüche 1 bis 11,
**dadurch gekennzeichnet,**
**dass** am Rührwerk (01, 26) zumindest ein Abstreifelement (09) angeordnet ist, das bei Antrieb des Rührwerks (01, 26) nahe der unteren und/oder seitlichen Bauteilwandung des Rührgefäßes (22) geführt wird.

13. Rührwerk nach Anspruch 12,
**dadurch gekennzeichnet,**
**dass** das Abstreifelement verstellbar am Rührwerk befestigt ist.

14. Rührwerk nach einem der Ansprüche 1 bis 13,
**dadurch gekennzeichnet,**
**dass** am Rührwerk und/oder am Rührgefäß ein Temperatursensor angeordnet ist.

15. Rührwerk nach einem der Ansprüche 1 bis 14,
**dadurch gekennzeichnet,**
**dass** am Rührwerk (01, 26) ein Eingreifschutzelement (21) angeordnet ist, mit dem die Öffnung des Rührgefäßes (22) im wesentlichen vollständig abgedeckt werden kann.

16. Rührwerk nach einem der Ansprüche 1 bis 15,
**dadurch gekennzeichnet,**
**dass** das Rührwerk (01, 26) durch einen Antriebsmotor antreibbar ist.

17. Rührwerk nach Anspruch 16,
**dadurch gekennzeichnet,**
**dass** der Antriebsmotor über eine Antriebswelle (20), die mit dem Rührwerkkopf (02, 23) mittelbar oder unmittelbar in Eingriff bringbar ist, mit dem Rührwerk (01, 26) verbunden wird.

18. Rührwerk nach Anspruch 16,
**dadurch gekennzeichnet,**
**dass** Rührwerk (26) eine sich vertikal am Rührwerk erstreckende Aufnahme (31, 32, 33, 34, 35) aufweist, in die die Antriebswelle zur drehfesten Befestigung des Rührwerks (26) von oben einsteckbar ist, wobei der Rührwerkkopf (23) nicht demontiert werden muss.

19. Rührwerk nach einem der Ansprüche 16 bis 18,
dadurch gekennzei chnet,
dass am Rührwerk (01, 26) wahlweise unterschiedliche Adapterelemente befestigbar sind, an denen jeweils verschiedene Antriebswellen (20) in Eingriff bringbar sind.

20. Rührwerk nach einem der Ansprüche 1 bis 19,
**dadurch gekennzeichnet,**
**dass** das Rührwerk durch Umwandlung eines Teils der Strömungsenergie des am Einlauf einströmenden Kühl- und/oder Heizmediums antreibbar ist, insbesondere dass am Einlauf Strömungslammellen angeordnet sind, die durch das durchströmende Kühl- und/oder Heizmedium angetrieben werden.

21. Rührwerk nach einem der Ansprüche 1 bis 20,
**dadurch gekennzeichnet,**
**dass** das Rührwerk (01, 26) als Schweißteil und/oder Klebeteil hergestellt ist.

22. Rührwerk nach einem der Ansprüche 1 bis 21,
**dadurch gekennzeichnet,**
**dass** am Rührwerk eine Ablasseinrichtung (18) zur Entfernung des Kühl- und/oder Heizmedium aus dem Rührflügel vorgesehen ist.

23. Rührwerk nach Anspruch 22,
**dadurch gekennzeichnet,**
**dass** die Ablasseinrichtung in der Art eines Ablassventils ausgebildet ist, an dem das des Kühl- und/oder Heizmedium unter Einwirkung der Schwerkraft abfließen kann.

24. Rührwerk nach Anspruch 23,
**dadurch gekennzeichnet,**
**dass** die Ablasseinrichtung in der Art eines Anschlusses (18) für ein Druckmedium, insbesondere Druckluft, ausgebildet ist, wobei das Kühl- und/oder Heizmedium durch das Druckmedium aus dem Rührwerk (01, 26) verdrängt werden kann.

25. Rührwerk nach einem der Ansprüche 1 bis 24,
**dadurch gekennzeichnet,**
**dass** das Rührwerk (01, 26) in einem Rührgefäß (22) anordenbar ist, das ebenfalls beheizt und/oder gekühlt werden kann, insbesondere dass das Rührgefäß (22) vom gleichen Kühl- und/oder Heizmedium durchströmbar ist wie der das Rührwerk (01, 26).

26. Rührwerk nach einem der Ansprüche 1 bis 25,
**dadurch gekennzeichnet,**
**dass** das Rührwerk (01, 26) in einem Kessel (22) zur Zubereitung von Speisen anordenbar ist.

## Claims

1. An agitator for arrangement in an agitator vessel wherein an intermixable mass contained in the agitator vessel can be thoroughly mixed by driving the agitator, and wherein the agitator is constructed in the fashion of a heat exchanger and a cooling and/or heating medium can flow through the agitator at least in sections, and wherein the agitator has an agitator head, at least one agitating vane and cross-pieces connecting the agitator head and the agitating vanes,
**characterized in**
**that** the agitator head (02, 23) is formed by a fixedly arranged lid (13, 24) and a tank (14, 25) rotatable together with the agitator (01, 26), wherein the lid (13, 24) can be affixed to said tank (14, 25) in a sealing fashion.

2. The agitator according to claim 1,
**characterized in**
**that** a gaseous or liquid cooling and/or heating medium is used, especially that iced water, ice slush, a glycol-water mixture, liquid nitrogen can be used as the cooling medium and/or that hot water or hot steam can be used as the heating medium.

3. The agitator according to claim 1 or claim 2,
**characterized in**
**that** in addition to the agitator head (02, 23) the agitator (01, 26) has at least one agitating vane (03) and cross-pieces (04, 05, 06, 07, 08) connecting the agitator head (02, 23) and said agitating vanes (03), wherein said agitating vanes (03) and said cross-pieces (04, 05, 06, 07, 08) are double-walled and are connected to a closed pipe whose inlet and whose return open into said agitator head (02, 23) wherein an inlet (15) and an outlet (16) for the cooling and/or heating medium are provided on said agitator head (02, 23).

4. The agitator according to claim 3,
**characterized in**
**that** said agitator head (02, 23) has two separate chambers (10, 11), wherein the first chamber (10) forms the inlet of the pipe through said agitator (01, 26) and to which said inlet (15) for the cooling and/or heating medium can be connected and wherein the second chamber (11) forms the return of the pipe through said agitator (01, 26) and to which said outlet (16) for the cooling and/or heating medium can be connected.

5. The agitator according to claim 4,
**characterized in**
**that** said chambers (10, 11) are formed by arrangement of a dividing wall (12) in said tank (14).

6. The agitator according to claim 4,
**characterized in**
**that** said tank (25) is constructed as circular ring-shaped and has an inner ring (27) and an outer ring (28), wherein the one chamber (10) is located inside said inner ring (27) and the second chamber (11) is located between said inner ring (27) and said outer ring (28).

7. The agitator according to claim 6,
**characterized in**
**that** a securing ring (29) is rotatably mounted on said tank (25) using a bearing element (30), especially a roller bearing, to which said lid (24) can be affixed such that the sealing gap between said lid (24) and said tank (25) is sealed.

8. The agitator according to claim 7,
**characterized in**
**that** said bearing element (30) is sealed in a watertight fashion towards both chambers (11).

9. The agitator according to any one of claims 1 to 8,
**characterized in**
**that** in the sealing gaps between said tank (14, 25) and said lid (13, 24) there are arranged shaft sealing rings (17).

10. The agitator according to any one of claims 3 to 9,
**characterized in**
**that** said agitating vanes (03) are arranged inclined relative to their movement plane.

11. The agitator according to any one of claims 3 to 10,
**characterized in**
**that** one of the cross-pieces (07) is constructed in the fashion of a ring conduit which can be penetrated by a drive shaft.

12. The agitator according to any one of claims 1 to 11,
**characterized in**
**that** on said agitator (01, 26) there is arranged at least one skimming element (09) that is guided near the lower and/or side component wall of the agitator vessel (22) when said agitator (01, 26) is driven.

13. The agitator according to claim 12,
**characterized in**
**that** said skimming element is adjustably attached to said agitator.

14. The agitator according to any one of claims 1 to 13,
**characterized in**
**that** a temperature sensor is arranged on said agitator and/or said agitator vessel.

15. The agitator according to any one of claims 1 to 14,
**characterized in**
**that** a tamper preventing element (21) is arranged on said agitator (01, 26) with which the opening of said agitator (22) can be substantially completely covered.

16. The agitator according to any one of claims 1 to 15,
**characterized in**
**that** said agitator (01, 26) can be driven by a drive motor.

17. The agitator according to claim 16,
**characterized in**
**that** the drive motor is connected to said agitator (01, 26) via a drive shaft (20) which can be brought directly or indirectly into engagement with said agitator head (02, 23).

18. The agitator according to claim 16,
**characterized in**
**that** said agitator (26) has a receptacle (31, 32, 33, 34, 35) extending vertically on said agitator, into which said drive shaft for rotationally fixed securing of said agitator (26) can be inserted from above, wherein said agitator head (23) need not be dismantled.

19. The agitator according to any one of claims 16 to 18,
**characterized in**
**that** different adapter elements can be affixed to said agitator (01, 26) as desired, to which respectively different drive shafts (20) can be brought into engagement.

20. The agitator according to any one of claims 1 to 19,
**characterized in**
**that** said agitator can be driven by converting some of the flow energy of the cooling and/or heating medium flowing in at the inlet, especially that flow lamellae are arranged at said inlet, which are driven by the through-flowing cooling and/or heating medium.

21. The agitator according to any one of claims 1 to 20,
**characterized in**
**that** said agitator (01, 26) is manufactured as a welded part and/or as a glued part.

22. The agitator according to any one of claims 1 to 21,
**characterized in**
**that** a drain device (18) to remove the cooling and/or heating medium from the agitating vane is provided on said agitator.

23. The agitator according to claim 22,
**characterized in**
**that** said drain device is constructed in the fashion of a drain valve at which said cooling and/or heating medium can drain off under the action of gravity.

24. The agitator according to claim 23,
**characterized in**
**that** said drain device is constructed in the fashion of a connection (18) for a pressurized medium, especially compressed air, wherein said cooling and/or heating medium can be displaced from said agitator (01, 26) by the pressurized medium.

25. The agitator according to any one of claims 1 to 24,
**characterized in**
**that** said agitator (01, 26) can be arranged in an agitator vessel (22) which can also be heated and/or cooled, especially that said agitator vessel (22) can have the same cooling and/or heating medium flowing through as said agitator (01, 26).

26. The agitator according to any one of claims 1 to 25,
**characterized in**
**that** said agitator (01, 26) can be arranged in a vessel (22) for the preparation of food.

## Revendications

1. Mélangeur destiné à venir se disposer dans un récipient d'agitation, dans lequel une matière apte à un mélange intime que contient le récipient d'agitation peut être soumis à un mélange intime par l'actionnement du mélangeur, et dans lequel le mélangeur est réalisé à la manière d'un échangeur de chaleur et peut être traversé, au moins par sections, par un milieu de refroidissement et/ou un milieu de chauffage, et dans lequel le mélangeur présente une tête de mélangeur, au moins une palette d'agitation, et des entretoises reliant la tête de mélangeur et les palettes d'agitation, **caractérisé en ce que** la tête de mélangeur (02, 23) est formée par un couvercle (13, 24) disposé à demeure et par une cuve (14, 25) apte à entrer en rotation de manière conjointe avec le mélangeur (01, 26), le couvercle (13, 24) pouvant être fixé en étanchéité sur la cuve (14, 25).

2. Mélangeur selon la revendication 1, **caractérisé en ce qu'**on utilise un milieu de refroidissement et/ou de chauffage gazeux ou liquide, en particulier, **en ce qu'**on peut mettre en oeuvre, à titre de milieu de refroidissement, de l'eau glacée, de la saumure glacée, un mélange de glycol-eau, de l'azote liquide et/ou **en ce qu'**on met en oeuvre, à titre de milieu de chauffage, de l'eau chaude ou de la vapeur chaude.

3. Mélangeur selon la revendication 1 ou 2, **caractérisé en ce que** le mélangeur (01, 26) présente, à côté de la tête de mélangeur (02, 23), au moins une palette d'agitation (03), et des entretoises (04, 05, 06, 07, 08) reliant la tête de mélangeur (02, 23) et les palettes d'agitation (03), les palettes d'agitation (03) et les entretoises de liaison (04, 05, 06, 07, 08) possédant une double paroi et étant reliées pour former un circuit fermé dont l'entrée et dont la sortie débouchent dans la tête de mélangeur (02, 23), une amenée (15) et une évacuation (16) pour le milieu de refroidissement et/ou de chauffage étant prévues sur la tête de mélangeur (02, 23).

4. Mélangeur selon la revendication 3, **caractérisé en ce que** la tête de mélangeur (02, 23) présente deux chambres séparées (10, 11), la première chambre (10) formant l'entrée du circuit à travers le mélangeur (01, 26), l'amenée (15) pour le milieu de refroidissement et/ou de chauffage pouvant venir se raccorder à ladite chambre, la deuxième chambre (11) formant la sortie du circuit à travers le mélangeur (01, 26), l'évacuation (16) pour le milieu de refroidissement et/ou de chauffage pouvant venir se raccorder à ladite chambre.

5. Mélangeur selon la revendication 4, **caractérisé en ce que** les chambres (10, 11) sont formées par agencement d'une paroi de séparation (12) dans la cuve (14).

6. Mélangeur selon la revendication 4, **caractérisé en ce que** la cuve 25 possède une configuration de forme circulaire et présente un anneau interne (27) et un anneau externe (28), la première chambre (10) étant disposée à l'intérieur de l'anneau interne (27) et la deuxième chambre (11) étant disposée entre l'anneau interne (27) et l'anneau externe (28).

7. Mélangeur selon la revendication 6, **caractérisé en ce qu'**un anneau de fixation (29) comportant un élément de palier (30), en particulier un palier à roulement, est monté en rotation contre la cuve (25), le couvercle (24) étant à même de venir se fixer audit palier de telle sorte que le jeu d'étanchéité ménagé entre le couvercle (24) et la cuve (25) est rendu étanche.

8. Mélangeur selon la revendication 7, **caractérisé en ce que** l'élément de palier (30) vient se disposer en étanchéité à l'eau par rapport aux deux chambres (11).

9. Mélangeur selon l'une quelconque des revendications 1 à 8, **caractérisé en ce que** des bagues d'étanchéité d'arbres (17) sont disposées dans les jeux d'étanchéité entre la cuve (14, 25) et le couvercle (13, 24).

10. Mélangeur selon l'une quelconque des revendications 3 à 9, **caractérisé en ce que** les palettes d'agitation (03) sont disposées en inclinaison par rapport à leur plan de mouvement.

11. Mélangeur selon l'une quelconque des revendications 3 à 10, **caractérisé en ce qu'**une des entretoises (07) est réalisée à la manière d'un conduit annulaire qui peut être traversé par un arbre d'entraînement.

12. Mélangeur selon l'une quelconque des revendications 1 à 11, **caractérisé en ce qu'**au moins un élément de raclage (09) est disposé sur le mélangeur (01, 26), qui est guidé, lors de l'entraînement du mélangeur (01, 26), à proximité de la paroi de construction inférieure et/ou latérale du récipient d'agitation (22).

13. Mélangeur selon la revendication 12, **caractérisé en ce que** l'élément de raclage est fixé de manière réglable sur le mélangeur.

14. Mélangeur selon l'une quelconque des revendications 1 à 13, **caractérisé en ce qu'**un capteur de température est disposé sur le mélangeur et/ou sur le récipient d'agitation.

15. Mélangeur selon l'une quelconque des revendications 1 à 14, **caractérisé en ce qu'**un élément de protection (21) s'opposant à la pénétration est disposé contre le mélangeur (01, 26), avec lequel l'ouverture du récipient d'agitation (22) peut être obturée de manière essentiellement complète.

16. Mélangeur selon l'une quelconque des revendications 1 à 15, **caractérisé en ce que** le mélangeur (01, 26) peut être entraîné par un moteur d'entraînement.

17. Mélangeur selon la revendication 16, **caractérisé en ce que** le moteur d'entraînement est relié au mélangeur (01, 26) via un arbre d'entraînement (20) qui peut être amené en engrènement direct ou indirect avec la tête de mélangeur (02, 23).

18. Mélangeur selon la revendication 16, **caractérisé en ce que** le mélangeur (26) présente un évidement (31, 32, 33, 34, 35) qui s'étend verticalement contre le mélangeur, dans lequel peut venir s'enficher par le haut l'arbre d'entraînement pour la fixation de l'agitateur (26) en antirotation, la tête de mélangeur (23) ne devant pas être démontée.

19. Mélangeur selon l'une quelconque des revendications 16 à 18, **caractérisé en ce qu'**au choix différents éléments faisant office d'adaptateurs peuvent venir se fixer au mélangeur (01, 26), éléments avec lesquels respectivement différents arbres d'entraînement (20) peuvent être amenés en engrènement.

20. Mélangeur selon l'une quelconque des revendications 1 à 19, **caractérisé en ce que** le mélangeur peut être entraîné par la transformation d'une partie de l'énergie d'écoulement du milieu de refroidissement et/ou de chauffage s'introduisant par écoulement à l'entrée, en particulier **en ce que**, des lamelles d'écoulement sont disposées à l'entrée, qui peuvent être entraînées par le milieu de refroidissement et/ou de chauffage passant à travers.

21. Mélangeur selon l'une quelconque des revendications 1 à 20, **caractérisé en ce que** le mélangeur (01, 26) est réalisé sous la forme d'un élément à souder et/ou d'un élément à coller.

22. Mélangeur selon l'une quelconque des revendications 1 à 21, **caractérisé en ce qu'**on prévoit, sur le mélangeur, un mécanisme d'évacuation (18) pour l'élimination du milieu de refroidissement et/ou de chauffage à l'écart de la palette d'agitation.

23. Mélangeur selon la revendication 22, **caractérisé en ce que** le mécanisme d'évacuation est réalisé à la manière d'une soupape d'évacuation contre laquelle le milieu de refroidissement et/ou de chauffage est en mesure de s'écouler sous l'influence de la force de gravité.

24. Mélangeur selon la revendication 23, **caractérisé en ce que** le mécanisme d'évacuation est réalisé à la manière d'un raccord (18) pour un milieu sous pression, en particulier de l'air sous pression, le milieu de refroidissement et/ou de chauffage pouvant être repoussé à l'extérieur du mélangeur (01, 26) par le milieu sous pression.

25. Mélangeur selon l'une quelconque des revendications 1 à 24, **caractérisé en ce que** le mélangeur (01, 26) peut être disposé dans un récipient d'agitation (22) qui peut également être chauffé et/ou refroidi, en particulier **en ce que** le récipient d'agitation (22) peut être traversé par le même milieu de refroidissement et/ou de chauffage que celui traversant le mélangeur (01, 26).

26. Mélangeur selon l'une quelconque des revendications 1 à 25, **caractérisé en ce que** le mélangeur (01, 26) peut venir se disposer dans une marmite (22) pour la préparation d'aliments.
